(19) **Europäisches Patentamt**
**European Patent Office**
**Office européen des brevets**

(11) **EP 2 493 084 B1**

(12) **EUROPEAN PATENT SPECIFICATION**

(45) Date of publication and mention
of the grant of the patent:
**11.12.2013 Bulletin 2013/50**

(51) Int Cl.:
***H04B 3/32*** *(2006.01)*

(21) Application number: **11305206.2**

(22) Date of filing: **25.02.2011**

(54) **Method and system for crosstalk cancellation in a multi-user access network**

Verfahren und System zur Nebensprechunterdrückung in einem Mehrfachbenutzer-Zugangsnetzwerk

Procédé et système pour l'annulation de diaphonie dans un réseau d'accès à plusieurs utilisateurs

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.08.2012 Bulletin 2012/35**

(73) Proprietor: **Alcatel Lucent**
**75007 Paris (FR)**

(72) Inventors:
• **Timmers, Michael**
**3020, Herent (BE)**
• **Maes, Jochen**
**2431, Veerle (BE)**

(74) Representative: **ALU Antw Patent Attorneys**
**Copernicuslaan 50**
**2018 Antwerpen (BE)**

(56) References cited:
**EP-A1- 2 043 276    US-A1- 2007 230 548**

## Description

**Field of Invention**

The present invention pertains to the field of crosstalk cancellation for multi-user access networks, and more particularly to efficiently allocating crosstalk cancellation resources to different digital subscriber lines.

**Background**

The concept of crosstalk cancellation, also known as vectoring, is known in the art and has been applied with success to digital subscriber line systems. The standard G.993.5 of the International Telecommunication Union, hereafter called "G.vector" specifies the necessary details to obtain interoperability between different network elements that apply crosstalk cancellation. According to the G.vector standard the crosstalk on a victim line is cancelled by adding perturbations on the victim line. The perturbation signal is added at the transmitter (pre-coding) or at the receiver (post-coding), depending on the transmission direction.

US2007/230548 discloses a xDSL system having a home network and a central office. Noise mitigation engines and controllers are part of the transceivers units at the CO and home network respectively. The four engines&controllers have 4 communication links. The engines and controllers are arranged to improve the DSL service, including deterioration by cross talk. The engines can measure noise during initialization. This allows estimating noise in the link. Noise reduction is configured accordingly and can be adapted.

D2 relates to another method for noise reduction.

The problem of heavily impacting the algorithm of the victim line has not been adequately addressed.

**Summary**

According to an aspect of the invention, there is provided a method for crosstalk cancellation in among one or more network links, or among a plurality of network links, said method comprising cancelling in a first network link crosstalk from a second network link by providing a signal component to a third network link.

Such a solution would be interesting in a number of scenarios, such as local loop unbundling or achieving backwards compatibility with legacy systems.

It should be noted that embodiments of the invention comprise systems in which crosstalk is substantially cancelled in one or more victim lines, as well as systems in which crosstalk remains generally uncancelled in one or more other victim lines. In some embodiment the method and apparatus according to invention provide only a limited cancellation of crosstalk in one or more victim lines.

According to the method a complete cancelling or at least a substantial cancelling of crosstalk in the first network link or victim line due to crosstalk from a second link or disturber line is obtained by precoding a signal in a third, other link, hereinafter also referred to as cancellation line. The method of crosstalk cancellation among a plurality of network links according to this application allows achieving cancellation in a single link only or in multiple links of the plurality of network links.

Embodiments of the invention can comprise one or more victim lines, one or more disturber lines and one or more cancellation lines.

In an embodiment the signal component provided to the third network link results in crosstalk on the first network link that is in anti-phase with the crosstalk from the second network link on the first network link. The signal component is a scaled and rotated version of the signal on the second network link causing the crosstalk to be cancelled.

In an embodiment of the method, the third link or cancellation line is a spare line. The spare line can be a network link temporarily not used for actual data communication or a network link permanently not used for actual data communication. In an embodiment, in absence of the method, the spare line would not be used at all for sending a signal or the line can be used to deliver POTS outside the spectrum of DSL. The spare line could be used in a spectrum range outside the spectrum in which the method would operate.

In an embodiment the spare line can be used in a spectrum range within an operating spectrum of the method. A possible condition for this embodiment is that a power spectral density is used lower than the power spectral density limitation on the spare line.

In an embodiment the method comprises determining channel coupling of the first and second network links and providing the crosstalk cancellation signal in the third network link dependent on the determined channel coupling. In order to be able to cancel the crosstalk in the victim line, the influence caused by a signal from the disturbing line is to be estimated.

In an embodiment the method comprises determining channel coupling of the first and third network links and providing the crosstalk cancellation signal in the third network link dependent on the determined channel coupling. In order to be able to cancel the crosstalk in the victim line, the influence of the signal in the third link upon the victim line is to be estimated.

In a further embodiment the crosstalk cancellation signal is controlled dependent on a ratio of the channel coupling of the first and second network links and the channel coupling of the first and third network links, respectively.

By determining (part of) the transfer function of the network links, cancellation of crosstalk from line B into line A can be achieved. If the received signal $y_A$ on line A is expressed as:

$$y_A = H_{AA}x_A + H_{AB}x_B + H_{AC}x_C + n$$

where $x_i$ is the signal transmitted on line i and $H_{ij}$ is the channel from the transmitter of line j to the receiver of line i. n is the additive noise. The person skilled in the art will understand that the cited coefficients are generally complex numbers, i.e. introducing an attenuation and a phase difference. The person skilled in the art will further understand that the cited coefficients are generally frequency-dependent; the frequency argument has not been explicitly mentioned in the above equations to avoid unnecessarily obscuring the notation.

Theoretically, cancellation of all crosstalk from line B into line A is achieved by precoding C with

$$x_c = - (H_{AB}/H_{AC}) x_B,$$

wherein the ratio of the channel coupling of the first and second network links and the channel coupling of the first and third network links, respectively. The ratio of the crosstalk couplings ($H_{AB}/H_{AC}$) has to be estimated at startup of line B, and tracked during regular operation (i.e., the "SHOWTIME" state) of line B

In an embodiment the method comprises determining a set of channel coupling coefficients (transfer function) between two network links in said plurality of network links.

In an embodiment the method comprises determining channel coupling by using a signal/noise ratio (SNR) method in the plurality of network links. Channel coupling coefficients can be estimated using a variant on the SNR method. As many legacy methods already provide SNR measurements, it is possible to use the acquired feedback from such measurements in an embodiment of this method.

In an embodiment the method further comprises controlling at least the second and third network links. The second and third link can be controlled by a single entity (access node, AN ), while the first link is out of control of this entity (on a different access node AN ). In an embodiment, known as "local loop unbundling", different lines in a physical bundle may not only be served by different access nodes, but these different access nodes may even be under the administrative and operational control of different operators. Local loop unbundling has been introduced as a legal requirement in many jurisdictions to avoid maintaining a monopoly for services offered over the local loop plant, which was originally built by the incumbent operator.

In an embodiment communication between different access nodes, such as AN and AN , is mediated by a (set of) control entity(entities), such as a Network Analyzer(-). This may be of particular interest in case of local loop unbundling, where AN and AN are operated by different companies.

In an embodiment of the method of the present invention, said plurality of network links operate according to discrete multi-tone modulation, and said determining is performed on a per-tone basis. Under discrete multi-tone modulation, all types of multi-carrier modulation are understood, including in particular DMT as used in ADSL, VDSL, and VDSL2, OFDM as used in wireless LAN, and wavelet modulation as used in IEEE 1901 power line communication.

In an embodiment of the method of the present invention, the network links are digital subscriber lines.

In an embodiment one, two or more victim lines (Ai) are disturbed by one, two or more disturber lines (Bi). In general, the use of multiple cancellation lines (Ci) is beneficial.

In an embodiment the number of cancellation lines (Ci) is larger than or equal to the number of victim lines (Ai). In such an embodiment a set of linear equations can be composed, using channel couplings, that generally can be solved in order to obtain a signal component for the cancellation lines that generally cancels the crosstalk in the victim lines (Ai). A suitable processor can be arranged to compose and solve the set of linear equations.

In an embodiment, specifically an embodiment having more victim lines than cancellation lines, the method provides a minimization method for calculating or approximating a signal component for one or more cancellation lines to minimize crosstalk in the victim lines. The minimization method, available from a memory, can be calculated using a suitable processor.

Also, transmit mask constraints on the third network link may cause a need for distributing the cancellation function over multiple cancellation lines. A person skilled in the art will be able, to calculate or estimate how the desired cancellation effect is achieved by a linear combination of two or more cancellation lines using the transfer function (or matrix).

According to another aspect of the invention, a system for cancelling crosstalk in a plurality of network links comprises a second transceiver unit operating a second link and a third transceiver unit operating a third link. The system further comprises a crosstalk canceller arranged to calculate a signal component to substantially cancel in a first network link crosstalk from at least a second network link, said signal component provided to a third network link. This system allows (partial) crosstalk cancellation without adding perturbations to the victim line (first network link).

In an embodiment the transceiver units and the crosstalk canceller form part of an access node. Accordingly at the access node the signal causing the crosstalk is available and can be used to calculate the signal component in the third network link to substantially cancel the crosstalk thereof in the victim line.

In an embodiment the system, and in particular the access node, comprises a channel coupling determination unit adapted to determine channel coupling of at least two network links, said channel coupling determination unit operatively coupled to the crosstalk canceller. The channel coupling determination unit allows determining channel couplings between pairs of network links.

In an embodiment the system comprises customer premise equipment (CPE) arranged to perform a signal noise ratio (SNR) measurement in at least one of the network links, the CPE being operatively coupled with the channel coupling determination unit. Legacy systems can comprise such CPE and can be used in a system and method according to the invention. The SNR measurement can be performed on request on a line. The SNR measurement comprises feedback that allows determining the channel coupling and channel coupling coefficients of a plurality of network links.

In an embodiment the crosstalk canceller is arranged to calculate the signal component dependent on a ratio of the channel coupling of the first and second network links and the channel coupling of the first and third network links, respectively.

In an embodiment of the system of the present invention, the network links are digital subscriber lines (DSL) and the access node is a DSLAM.

In an embodiment the third network link is a spare line. A spare line is a link (temporarily) not used for data communication.

In an embodiment the system comprises at least one network analyzer for moderating communication between access nodes at both ends of the network links. The network analyzer can moderate communication between AN and AN . In an embodiment a set of control entity, such as a set of network analyzers, can be used. In an embodiment different network analyzers from e.g. different companies operate AN and AN . This may be of particular interest in case of local loop unbundling.

In an embodiment of the system of the present invention, said plurality of network links operate according to discrete multi-tone modulation, and said optimizing is performed on a per-tone basis.

## Brief Description of the Figures

Some embodiments of apparatus and/or methods in accordance with embodiments of the present invention are now described, by way of example only, and with reference to the accompanying drawings, in which:

Figure 1   shows a system of links of a network;
Figure 2   shows an embodiment of an arrangement according to the invention;
Figure 3   shows a further embodiment of a system according to the invention;
Figure 4   is a schematic diagram of an embodiment of a system according to the present invention, operating on the downstream transmission.
Figure 5   shows a further schematic embodiment of a sytem according to the invention;
Figure 6   shows a further schematic embodiment of a sytem according to the invention; and
Figure 7   shows a further schematic embodiment of a sytem according to the invention

## Description of Embodiments

Now the invention will be illustrated referring to the drawings.

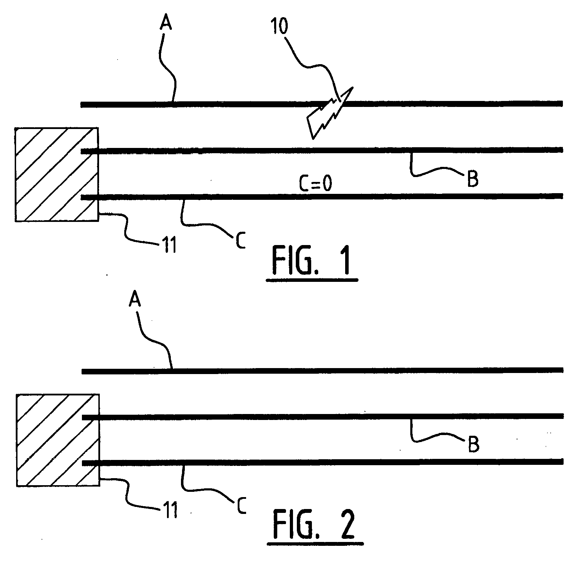

Figure 1 schematically shows a situation causing problems in current systems. Of a system of a plurality of network links, three links, line A, line B and a line C are shown. In this embodiment line A, the victim line, will show a deteriorated signal as a result of the crosstalk 10 from line B, the disturber line.

In said system a crosstalk canceller, part of system 11, could be connected to line A to provide for an additional signal component to be added to signal A to compensate for the crosstalk from B.

The system of Figure 1 will most likely have a further line C that is temporarily not being used, here shown as C=0. Not all twisted pairs of links are used, for example because a link is not coupled to a customer, or because the customer, using line C, is temporarily not active.

In an embodiment line C can be under-used in a spectrum range within the spectrum in which the method would operate. A possible condition for such an embodiment is that a signal component is used having a power spectral density lower than the power spectral density limitation on the spare line. Such under-use can be static or temporal, for example due to operation of the line in a power saving mode.

As shown schematically in Figure 2, and in accordance with an embodiment of the invention, a signal is sent over line C which will allow cancelling most of the crosstalk received at A from line B. A crosstalk canceller is connected to line C. The crosstalk canceller will send a signal component of line C. According to an embodiment a scaled and rotated version of the B data is sent over line C, which will result in the crosstalk at A to be removed. The signal component delivered to line C will result in further crosstalk of this third network link C onto victim line A, said further crosstalk being in anti-phase with the crosstalk from line B onto A. The result of the combined crosstalk is substantially zero.

In this embodiment line C is used as a cancellation line to cancel crosstalk to line A. In this embodiment line C is under control of the crosstalk canceller.

In the embodiment according to Figure 2, both lines B and C are controlled by a single entity (access node, $AN_\beta$), while line A is out of control of this entity (on a different access node $AN_\alpha$).

In an embodiment line C is the common mode of line B, or line C is the second differential pair within the same quad as line B, or line C is the phantom mode of line B and another pair.

Lines B and C can operate on a different technology than line A. For instance, line B can operate on a 30a VDSL2 profile, while line A operates on a lower bandwidth VDSL2 profile.

Alternatively, lines B and C operate in synchronous mode in G.vector, while line A operates on legacy VDSL2, unsynchronized with lines B and C. In an embodiment line A operates at different symbol rate. Alternatively, lines B and C operate on a next generation DSL while line A is VDSL2 (vectored or non-vectored).

Synchronization of lines B and C with line A is not required. It is sufficient that synchronization is present between lines B and C that are on the same access node AN .

If C and B are terminated at the same customer premises, for example if C is the common mode of line B or the phantom mode of line B with another pair, the technique is applicable in upstream as well as downstream.

If the received signal $y_A$ on line A is expressed as:

$$y_A = H_{AA}x_A + H_{AB}x_B + H_{AC}x_C + n$$

then cancellation of crosstalk from line B into line A is achieved by precoding C with

$$x_c = -(H_{AB}/H_{AC})\ x_B.$$

Precoding is obtained using a crosstalk canceller arranged to provide a signal component $x_c$. $H_{AB}/H_{AC}$ is the ratio of channel coupling coefficient between the first and second network link, and the channel coupling coefficient between the first and third network link. In an embodiment an estimation or approximation of the ratio is obtained and used for calculation of the signal component in the crosstalk canceller.

In an embodiment power spectral density limitations apply to the cancellation line C. If in accordance with an embodiment of the method, a signal component on the cancellation line would exceed the power spectral density limit, then the signal can be multiplied by a scalar scaling factor s. In the embodiment wherein a signal component is calculated using the channel couplings, $x_c$ can be expressed as:

$$x_c = -\ s\ (H_{AB}/H_{AC})\ x_B.$$

s can be calculated such that the power of the signal, $|x_c|^2$, is equal to or lower than the power spectral density limit. In this case, the crosstalk from line B into line A is only partly removed. If multiple spare or cancellation lines Ci are available, the power can be distributed over the multiple cancellation lines Ci to obtain further crosstalk cancellation.

The power of the signal $x_c$ may also be limited due to other signals transceived over cancellation line C. For example, if $x_c'$ is the signal transmitted on line C for data communication over line C, then the power of the total signal transmitted on line C, $|x_c + x_c'|^2$ must be equal to or lower than the transmit spectral density. In one assumption that the signals $x_c$ and $x_c'$ are uncorrelated, the power sent on line C equals $|x_c|^2 + |x_c'|^2$. In this case, the signal power $|x_c|^2$ must be equal to or smaller than the power spectral density limit decreased with the signal power $|x_c'|^2$. If a second cancellation line C2 is available, the crosstalk from the signal $x_c$' into line A can in its turn be cancelled using cancellation line C2. Disturber line B can be such cancellation line C2, provided that disturber line B is under-used.

While $x_B$ is readily available at AN , the ratio of the crosstalk couplings ($H_{AB}/H_{AC}$) needs to be estimated at startup of line B, and tracked during SHOWTIME of line B. For this, feedback from line A is required.

For example, the ratio can be estimated using a variant on the SNR method. In this case the feedback consists of SNR measurements. Today's DSLAMs are equipped to launch and report an SNR measurement on a line on request. The communication between AN and AN may be moderated by a (set of) control entity, such as a network analyzer. This may be of particular interest in case of local loop unbundling, where AN and AN are operated by different companies.

Although Figure 2 shows three network links of a plurality of network links, the method and system can be expanded to cope with a higher number of uncontrolled (victim) lines $A_i$, and a higher number of disturber lines $B_i$. In general, this will require the use of multiple cancellation lines $C_i$.

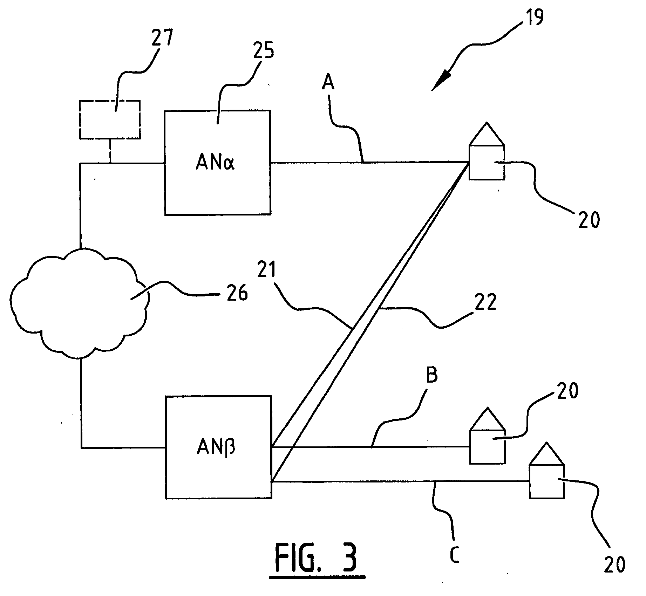

Figure 3 shows a further schematic embodiment of a system according to the invention. The network 19 comprises several network links connected to customers 20 having customer premises equipment (not shown). Line A receives crosstalk 21 from line B and crosstalk 22 from line C. Node AN 23 and AN 24 can be different control entities connected via a "cloud" 26. A network analyzer 27 is connected to the cloud 26. An SNR method can be used to estimate the ratio of the crosstalk between channels $H_{AB}$ / $H_{AC}$. By altering $x_B$ and $x_C$ and looking at the resulting SNR difference at line A, a set of equations can be calculated from which $H_{AB}$ and $H_{AC}$ can be derived as will be clear for the skilled person. Reference is made to prior art SNR methods. These calculations can be performed in the crosstalk canceller or in a further processor part of the system.

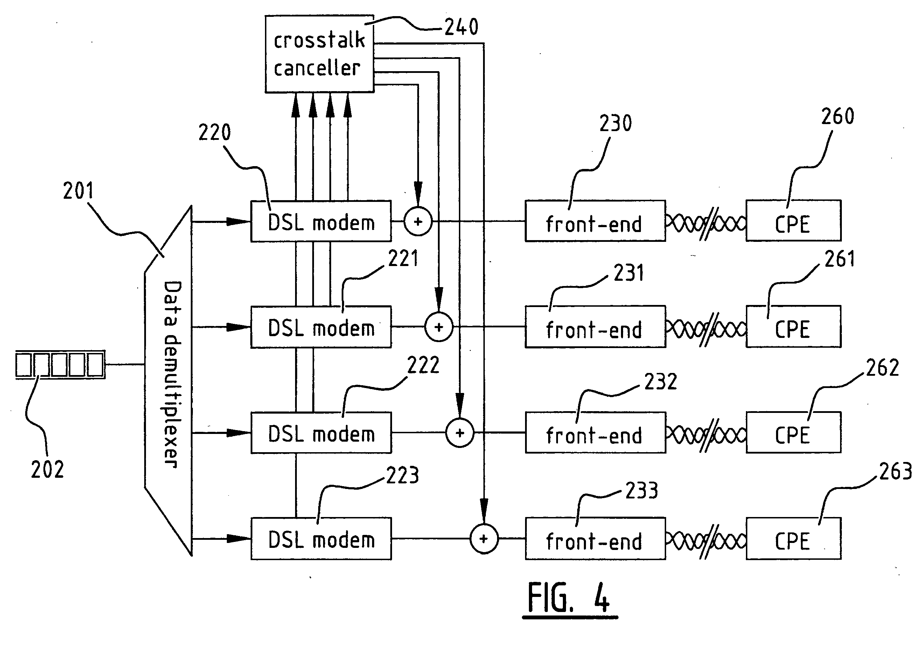

Figure 4 depicts an exemplary system that can incorporate the method and system according to the present invention. Without loss of generality, the example is directed to network access links of the digital subscriber line (DSL) type.

The depicted system comprises a plurality of DSL modems 220-223. For reasons of clarity, only four DSL modems are shown in the Figure; however, the invention is not limited to any particular number of DSL modems. The same remark is valid for the other elements, associated with the DSL modems 220-223, for which the same particular number of instances is illustrated.

In Figure 4, the system is illustrated as it would operate to perform crosstalk cancellation in the downstream direction, i.e. from the access node to the customer premises equipment 260-263.

The DSL modems 220-223 may operate according to any of the known xDSL flavors. It is particularly advantageous to use DSL modems that operate according to the Discrete-Multitone modulation scheme, such as for instance ADSL, VDSL, VDSL2, or 10PASS-TS modems.

Each of the DSL modems 220-223 is arranged to transmit a signal onto a transmission line such as a "twisted-pair" telephone line, which is typically provided as a pair of insulated copper wires. To this end, the signal generated by the DSL modems 220-223 is duly amplified and filtered by their respective front-ends 230-233, the details of which are not material to this invention.

Without loss of generality, the DSL modems 220-221 receive data for transmission from a data demultiplexer 201, for which a common input buffer 202 is also illustrated. Without loss of generality, a buffer may be considered to receive data at the granularity of data link layer datagrams or frames, network layer datagrams or packets, or higher-layer segments.

The crosstalk canceller 240 can operate on the basis of knowledge of the characteristics of the transmission lines, including their crosstalk transfer functions, and, in this embodiment, of the signals transmitted by the DSL modems 220-221; the latter information is schematically represented by arrows leading from the DSL modems 220-221 to the crosstalk canceller 240. In an embodiment the crosstalk canceller 240 is unaware of the signal as sent by DSL modem 223, if this is the victim line.

From this information, the crosstalk canceller 240 calculates for each of the used DSL modems a signal component that can be sent over line 262 in order to substantially cancel out the effect of the targeted disturbers, here signals sent to CPE 260 and 261, on the victim receiver, here CPE 263.

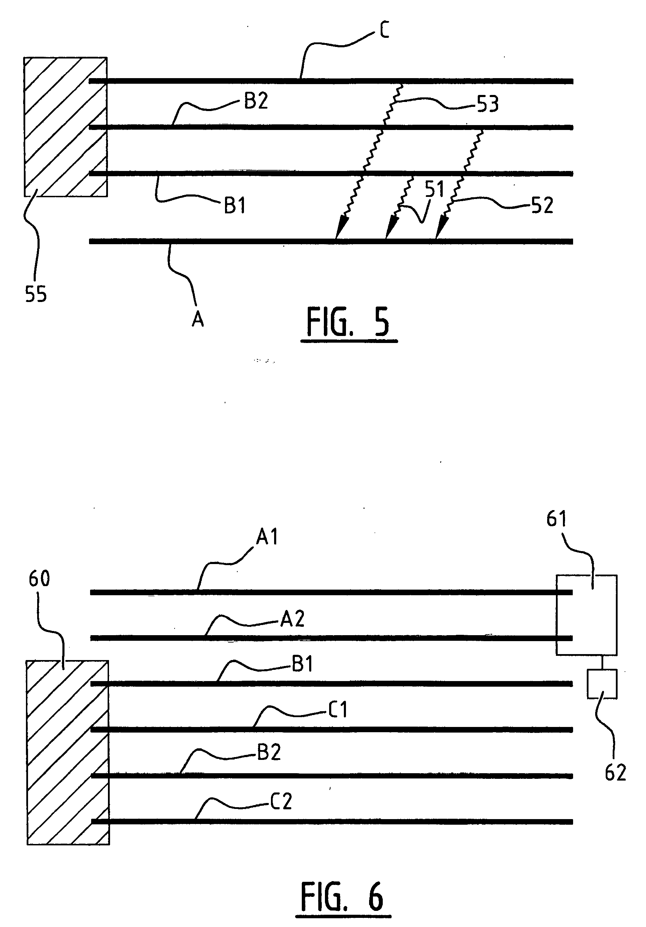

Figure 5 schematically shows a further embodiment comprising a network having one victim line A, two disturber lines B1, B2, and one spare line or cancellation line C. Disturber lines B1, B2 cause crosstalk 51,52 respectively. Cancellation line C will cause crosstalk 53 cancelling at least partially some of the crosstalk 51,52.

In this embodiment a crosstalk cancellation method according to the invention is obtained by providing a signal component in line C generally expressed by:

$$x_c = - (H_{AB1}/H_{AC}) \ x_{B1} - (H_{AB2}/H_{AC}) \ x_{B2}$$

Signals $x_c$, $x_{B1}$ and $x_{B2}$ are controlled from a single access node 55. The expression can be generalized to any number of disturber lines (Bi) for a single victim line A.

As the crosstalk, already from a single disturber line Bx, could potentially result in a signal component $x_c$ exceeding power spectral density limits, it is possible to scale the resulting signal component. If multiple spare or cancellation lines Ci are available, the power can be distributed over the multiple cancellation lines Ci.

Figure 6 schematically illustrates an embodiment of a network comprising multiple network links of which two victim lines A1 and A2, two disturber lines B1 and B2, and two cancellation lines, C1 and C2 are shown. The received signal $y_{A1}$ on line A1 can be expressed as:

$$y_{A1} = H_{A1A1}x_{A1} + H_{A1A2}x_{A2} + H_{A1B1}x_{B1} + H_{A1B2}x_{B2} + H_{A1C1}x_{C1} + H_{A1C2}x_{C2} + n_{A1}$$

, wherein $n_{A1}$ is a noise term representing other noises received on line A1.

The expression for the signal on line A2 is obtained by interchanging A1 and A2 in the above expression.

In an embodiment the signals on the lines A1 and A2 is not controlled directly. In this embodiment $H_{A1A2}x_{A2}$ is part of the noise term: $n' = H_{A1A2}x_{A2} + n$.

In an embodiment the method according to any embodiment of the invention is combined with prior art method such a G.vector. In such an embodiment access node AN ,61 can be equipped with a vectoring module 62. The vectoring module 62 will reduce the resulting crosstalk between A1 and A2. In an approximation of this embodiment n' is the sum of n and the residual crosstalk. The expression can then be simplified:

$$y_{A1} = H_{A1A1}x_{A1} + H_{A1B1}x_{B1} + H_{A1B2}x_{B2} + H_{A1C1}x_{C1} + H_{A1C2}x_{C2} + n_{A1}'$$

In this embodiment a cancellation of a substantial amount of cross talk from lines B1 and B2 into victim lines A1 and A2 is achieved by precoding C1 and C2 with signal components $x_{C1}$ and $x_{C2}$ that solve the following set of equations with two unknowns:

$$H_{A1B1}x_{B1} + H_{A1B2}x_{B2} + H_{A1C1}x_{C1} + H_{A1C2}x_{C2} = 0$$

$$H_{A2B1}x_{B1} + H_{A2B2}x_{B2} + H_{A2C1}x_{C1} + H_{A2C2}x_{C2} = 0$$

resulting in:

$$x_{C1} = [H_{A1C2}H_{A2B1} - H_{A2C2}H_{A1B1}] / [H_{A2C2}H_{A1C1} - H_{A2C1}H_{A1C2}] \ x_{B1} + [H_{A1C2}H_{A2B2} - H_{A2C2}H_{A1B2}] / [H_{A2C2}H_{A1C1} - H_{A2C1}H_{A1C2}] \ x_{B1}$$

and

$$x_{C2} = [-H_{A1C1}H_{A2B1} + H_{A2C1}H_{A1B1}] / [H_{A2C2}H_{A1C1} - H_{A2C1}H_{A1C2}] \ x_{B1} + [-H_{A1C1}H_{A2B2} + H_{A2C1}H_{A1B2}] / [H_{A2C2}H_{A1C1} - H_{A2C1}H_{A1C2}] \ x_{B2}$$

which can, notationally, be simplified by introducing $g = 1/[H_{A2C2}H_{A1C1} - H_{A2C1}H_{A1C2}]$ :

$$x_{C1} = g \ [(H_{A1C2}H_{A2B1} - H_{A2C2}H_{A1B1})x_{B1} + (H_{A1C2}H_{A2B2} - H_{A2C2}H_{A1B2})x_{B2}]$$

$$x_{C2} = g \left[ (-H_{A1C1}H_{A2B1} + H_{A2C1}H_{A1B1}) x_{B1} + (-H_{A1C1}H_{A2B2} + H_{A2C1}H_{A1B2}) x_{B2} \right]$$

It should be noted that, in this embodiment, the set of equations can also be written as a function of relative crosstalk functions: $H_{AiBj}/H_{AiCk}$ and $H_{AiCj}/H_{AiCk}$ with i, j and k elements of {1,2}. It is therefore sufficient to know for each victim line the crosstalk functions with crosstalk line Bj and spare line $C_j$ relative to each of the cancellation lines Ck.

The above equations can be applied to a scenario with two victim lines, two cancellation lines and one disturber line by stating that in that case $\times_{B2} = 0$.

The above equations and approach can be generalized to any scenario in which the number of cancellation lines is larger than or equal to the number of victim lines.

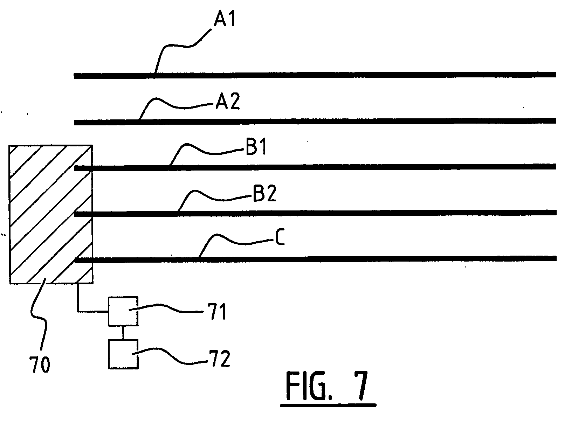

Figure 7 schematically shows an embodiment of a network having multiple network links, of which two victim lines, A1 and A2, two disturber lines, B1 and B2, and one spare or cancellation line C is shown. In this embodiment, neglecting crosstalk from and between other available network links, the received signal $y_{A1}$ on line A1 is expressed as:

$$y_{A1} = H_{A1A1}x_{A1} + H_{A1B1}x_{B1} + H_{A1B2}x_{B2} + H_{A1C}x_{C} + n_{A1}'$$

And the expression for A2 is obtained by interchanging A1 and A2 in the expression.

Generally any of the embodiments of the invention can comprise a processor for solving or minimizing linear equations.

In the embodiment according to Figure 7, due to an external reason, e.g. lack of further spare lines, a number of spare lines less than the number of victim lines is available. In this embodiment it is generally not feasible to remove all crosstalk in the victim lines Ai. Nevertheless, signal component $x_C$ can be chosen as to minimize the crosstalk into A1 and A2:

$$\min(H_{A1B1}x_{B1} + H_{A1B2}x_{B2} + H_{A1C}x_{C})$$

$$\min(H_{A2B1}x_{B1} + H_{A2B2}x_{B2} + H_{A2C}x_{C})$$

Generally, there is not a single $\times_C$ that minimized both functions. Therefore, $\times_C$ must be optimized.

Different optimization techniques are available. In an embodiment the optimization technique in the processor for linear equations 71, is available from a suitable memory 72. The memory can comprise linear term minimization, quadratic term minimization such as least mean square minimization or minimization in logarithmic scale.

In an embodiment of linear term minimization weighted sum optimization is applied. Weights $w_i$ are assigned to each victim line (with the sum over i of $w_i$ equal to 1) and then $\times_C$ is found by solving the following linear equation:

$$\mathrm{Min}\left[w_1 | H_{A1B1}x_{B1} + H_{A1B2}x_{B2} + H_{A1C}x_{C} | + w_2 | H_{A2B1}x_{B1} + H_{A2B2}x_{B2} + H_{A2C}x_{C} | \right]$$

The choice of weights can be based on several principles. In an embodiment, each victim line is treated similarly: $w_i = 1/N$ for all i, with N the number of victim lines.

In another embodiment the weights can be based on how well victim line Ai achieves its target data rate $R^T_i$. One way to achieve this is by selecting $w_i$ proportional to $R_i/R^T_i$ where $R_i$ is the data rate of line Ai.

In yet a further embodiment the weights are based on the service level agreement between the customer and the service provider. Equal weights are assigned to lines within the same service level, while different (resp. higher) weights can be assigned to lines from different (resp. higher) service levels.

The above equation and approach can be generalized to any scenario in which the number of cancellation lines is smaller than the number of victim lines.

In the embodiment of Figure 7 node 70 can be coupled to a processor 71 for solving linear equations, provided with a suitable method for solving linear equations from memory 72. Memory 72 can provide the minimizing method.

Without loss of generality, the crosstalk cancelling signal can be represented in a simplified manner and it will be appreciated by those skilled in the art that the crosstalk cancellation may be obtained in different ways, including by the application of a precoding matrix, for instance after the mapping and scaling steps, and before the inverse fast-fourier-transform. The crosstalk canceller 240 may be implemented in any of the known components used for intensive numerical calculations, including adequately programmed general-purpose processors or DSPs, FPGAs, or dedicated hardware. The skilled person will understand that the foregoing general scheme may be used with any type of linear precoder.

The functions of the various elements shown in the Figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. A method for reducing noise as a result of crosstalk among a plurality of network links, said method comprising reducing noise in a first network link (A) as a result of crosstalk (10) from a second network link (B) by providing a cancellation signal to a third network link, **characterized in that** the method comprises determining channel couplings between the first and the second and the first and the third network (C) links respectively and calculating the crosstalk cancellation signal dependent on the determined channel couplings.

2. The method of claim 1, wherein in the method the third network link (C) is a spare line at least temporarily not used for actual data transmission.

3. The method of claim 2, wherein the crosstalk cancellation signal is controlled dependent on a ratio of the channel coupling of the first and second network links and the channel coupling of the first and third network links, respectively.

4. The method of any of the preceding claims, wherein determining channel coupling comprises using a signal/noise ratio method in the plurality of network links.

5. The method of any of the preceding claims, wherein the method further comprises controlling at least the second and third network links by a single entity such as an access node.

6. The method according to any of the preceding claims, wherein said network links are digital subscriber lines.

7. A system for reducing noise as a result of crosstalk (10) in a plurality of network links, said system comprising a second transceiver unit and a third transceiver unit operating a second link and a third link respectively, **characterized by** the system further comprising a crosstalk canceller (11) arranged to calculate a signal component to reduce noise in a first network link (A) as a result of crosstalk (11) from at least a second network link (B), the calculated signal component at least dependent on determined channel couplings between the first and second and the first and third network links, said signal component provided to the third network link (C).

8. The system of claim 7, wherein the transceiver units and the crosstalk canceller (11) form part of an access node (55).

9. The system of claim 8, wherein the system comprises a channel coupling determination unit adapted to determine channel coupling of at least two network links, said channel coupling determination unit operatively coupled to the crosstalk canceller.

10. The system of claim 9, wherein the system comprises customer premise equipment (CPE) arranged to perform a signal noise ratio measurement in.at least one of the network links, the CPE being operatively coupled with the channel coupling determination unit.

11. The system according to claim 9 or 10, wherein the crosstalk canceller arranged to calculate the signal component dependent on a ratio of the channel coupling of the first and second network links and the channel coupling of the first and third network links, respectively.

12. The system according to any of the claims 7- 11, wherein said network links are digital subscriber lines (DSL) and wherein the access node is a digital subscriber line access multiplexer (DSLAM).

13. The system according to any of the claims 7-12, wherein the third network link is a spare line.


**Patentansprüche**

1. Verfahren zur Reduzierung des durch Nebensprechen in einer Vielzahl von Netzwerk-Links verursachten Rauschens, wobei das Verfahren das Reduzieren des durch Nebensprechen (10) von einem zweiten Netzwerk-Link (B) verursachten Rauschens in einem ersten Netzwerk-Link (A) durch Bereitstellen eines Unterdrückungssignals an einen dritten Netzwerk-Link umfasst, **dadurch gekennzeichnet, dass** das Verfahren das Ermitteln von Kanalkopplungen jeweils zwischen dem ersten und dem zweiten und dem ersten und dem dritten Netzwerk-Link (C) und das Berechnen des Nebensprechunterdrückungssignals in Abhängigkeit von den ermittelten Kanalkopplungen umfasst.

2. Verfahren nach Anspruch 1, wobei in dem Verfahren der dritte Netzwerk-Link (C) eine Ersatzleitung ist, welche zumindest vorübergehend nicht für eine aktuelle Datenübertragung benutzt wird.

3. Verfahren nach Anspruch 2, wobei das Nebensprechunterdrückungssignal in Abhängigkeit von einem Verhältnis von jeweils der Kanalkopplung des ersten und des zweiten Netzwerk-Links zu der Kanalkopplung des ersten und des dritten Netzwerk-Links gesteuert wird.

4. Verfahren nach einem beliebigen der vorstehenden Ansprüche, wobei das Ermitteln der Kanalkopplung das Anwenden eines Signal-zu-Rauschverhältnis-Verfahrens in der Vielzahl von Netzwerk-Links umfasst.

5. Verfahren nach einem beliebigen der vorstehenden Ansprüche, wobei das Verfahren weiterhin das Steuern mindestens des zweiten und des dritten Netzwerk-Links durch eine einzelne Entität wie beispielsweise einen Zugangsknoten umfasst.

6. Verfahren nach einem beliebigen der vorstehenden Ansprüche, wobei die besagten Netzwerk-Links digitale Teilnehmerleitungen sind.

7. System zur Reduzierung des durch Nebensprechen (10) in einer Vielzahl von Netzwerk-Links verursachten Rauschens, wobei das System eine zweite Transceiver-Einheit und eine dritte Transceiver-Einheit umfasst, welche jeweils einen zweiten Link und einen dritten Link betreiben, **dadurch gekennzeichnet, dass** das System weiterhin eine Nebensprechunterdrückungseinrichtung (11) umfasst, welche für das Berechnen einer Signalkomponente ausgelegt ist, um das durch ein Nebensprechen (11) von mindestens einem zweiten Netzwerk-Link (B) verursachte Rauschen in einem ersten Netzwerk-Link (A) zu reduzieren, wobei die berechnete Signalkomponente zumindest von den ermittelten Kanalkopplungen zwischen dem ersten und dem zweiten und dem ersten und dem dritten Netzwerk-Link abhängt, wobei die besagte Signalkomponente an den dritten Netzwerk-Link (C) bereitgestellt wird.

8. System nach Anspruch 7, wobei die Transceiver-Einheiten und die Nebensprechunterdrückungseinheit (11) Bestandteile eines Zugangsknotens (55) sind.

9. System nach Anspruch 8, wobei das System eine Kanalkopplungsermittlungseinheit umfasst, welche für das Ermitteln einer Kanalkopplung von mindestens zwei Netzwerk-Links ausgelegt ist, wobei die besagte Kanalkopplungsermittlungseinheit operativ an die Nebensprechunterdrückungseinheit gekoppelt ist.

10. System nach Anspruch 9, wobei das System ein Teilnehmer-Endgerät (CPE) umfasst, welches für das Durchführen einer auf dem Signal/Geräuschverhältnis basierten Messung ausgelegt ist, wobei das CPE operativ mit der Kanalkopplungsermittlungseinheit gekoppelt ist.

11. System nach Anspruch 9 oder 10, wobei die Nebensprechunterdrückungseinrichtung für das Berechnen der Signalkomponente in Abhängigkeit von einem Verhältnis von jeweils der Kanalkopplung des ersten und des zweiten Netzwerk-Links zu der Kanalkopplung des ersten und des dritten Netzwerk-Links ausgelegt ist.

12. System nach einem beliebigen der Ansprüche 7-11, wobei die besagten Netzwerk-Links digitale Teilnehmerleitungen (DSL) sind, und wobei der Zugangsknoten ein digitaler Teilnehmerleitungs-Zugangsmultiplexer (DSLAM) ist.

13. System nach einem beliebigen der Ansprüche 7 -12, wobei der dritte Netzwerk-Link eine Ersatzleitung ist.

**Revendications**

1. Procédé de réduction du bruit en raison de la diaphonie parmi une pluralité de liaisons de réseau, ledit procédé comprenant la réduction du bruit dans une première liaison de réseau (A) en raison de la diaphonie (10) à partir d'une deuxième liaison de réseau (B) en fournissant un signal d'annulation à une troisième liaison de réseau, **caractérisé en ce que** le procédé comprend la détermination de couplages de canaux entre la première et la deuxième et la première et la troisième liaisons de réseau (C) respectivement et le calcul du signal d'annulation de diaphonie en fonction des couplages de canaux déterminés.

2. Procédé selon la revendication 1, dans lequel dans le procédé, la troisième liaison de réseau (C) est une ligne de secours au moins temporairement non-utilisée pour une transmission de données réelle.

3. Procédé selon la revendication 2, dans lequel le signal d'annulation de diaphonie est contrôlé en fonction d'un rapport entre le couplage de canaux des première et deuxième liaisons de réseau et le couplage de canaux des première et troisième liaisons de réseau, respectivement.

4. Procédé selon l'une quelconque des revendications précédentes, dans lequel la détermination d'un couplage de canaux comprend l'utilisation d'un procédé de rapport signal sur bruit dans la pluralité de liaisons de réseau.

5. Procédé selon l'une quelconque des revendications précédentes, dans lequel le procédé comprend en outre le contrôle d'au moins les deuxième et troisième liaisons de réseau par une entité unique comme un noeud d'accès.

6. Procédé selon l'une quelconque des revendications précédentes, dans lequel lesdites liaisons de réseau sont des lignes d'abonné numérique.

7. Système pour réduire le bruit en raison de la diaphonie (10) dans une pluralité de liaisons de réseau, ledit système comprenant un deuxième module émetteur/récepteur et un troisième module émetteur/récepteur exécutant une deuxième liaison et une troisième liaison respectivement, **caractérisé en ce que** le système comprend en outre un dispositif d'annulation de diaphonie (11) conçu pour calculer une composante de signal pour réduire le bruit dans une première liaison de réseau (A) en raison de la diaphonie (11) à partir d'au moins une deuxième liaison de réseau (B), la composante de signal calculée dépendant au moins de couplages de canaux déterminés entre les première et deuxième et les première et troisième liaisons de réseau, ladite composante de signal étant fournie à la troisième liaison de réseau (C).

8. Système selon la revendication 7, dans lequel les modules émetteurs/récepteurs et le dispositif d'annulation de diaphonie (11) font partie d'un noeud d'accès (55).

9. Système selon la revendication 8, dans lequel le système comprend une unité de détermination de couplage de canaux adaptée pour déterminer le couplage de canaux d'au moins deux liaisons de réseau, ladite unité de détermination de couplage de canaux étant couplée de manière opérationnelle au dispositif d'annulation de diaphonie.

**10.** Système selon la revendication 9, dans lequel le système comprend un équipement des locaux d'abonné (CPE) conçu pour effectuer une mesure du rapport signal sur bruit dans au moins une des liaisons de réseau, le CPE étant couplé de manière opérationnelle à l'unité de détermination de couplage de canaux.

**11.** Système selon la revendication 9 ou 10, dans lequel le dispositif d'annulation de diaphonie est conçu pour calculer la composante de signal en fonction d'un rapport entre le couplage de canaux des première et deuxième liaisons de réseau et le couplage de canaux des première et troisième liaisons de réseau, respectivement.

**12.** Système selon l'une quelconque des revendications 7 à 11, dans lequel lesdites liaisons de réseau sont des lignes d'abonné numérique (DSL) et dans lequel le noeud d'accès est un multiplexeur d'accès de ligne d'abonné numérique (DSLAM).

**13.** Système selon l'une quelconque des revendications 7 à 12, dans lequel la troisième liaison de réseau est une ligne de secours.

FIG. 1

FIG. 2

FIG. 3

FIG. 4

## FIG. 5

## FIG. 6

FIG. 7

**EP 2 493 084 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007230548 A